# EUROPÄISCHE PATENTSCHRIFT

(11) **EP 0 604 532 B1**
(45) Veröffentlichungstag und Bekanntmachung des Hinweises auf die Patenterteilung: **29.05.1996**
(21) Anmeldenummer: 92920077.2
(22) Anmeldetag: 17.09.1992
(51) Int. Cl.: B60N 2/22

(54) **ANTRIEB ZUR BETÄTIGUNG EINER MEHRFACH VERSTELLBAREN RÜCKENLEHNE**
DRIVE FOR ACTUATING A MULTIPLE-POSITION ADJUSTABLE BACK
DISPOSITIF D'ENTRAINEMENT POUR L'ACTIONNEMENT DE DOSSIERS A POSITIONS REGLABLES MULTIPLES

(30) Priorität: 17.09.1991 AT 18709/91
(43) Veröffentlichungstag der Anmeldung: 06.07.1994
(73) Patentinhaber: SCHUSTER, Wilhelm, Sen., A-4030 Linz (AT)
(72) Erfinder: SCHUSTER, Wilhelm, Jr., A-4210 Gallneukirchen (AT); SCHUSTER, Wilhelm, Sr., A-4030 Linz (AT)
(74) Vertreter: Piso, Eberhard, Dr.
(86) Internationale Anmeldenummer: AT9200119
(87) Internationale Veröffentlichungsnummer: WO9305982

(56) Entgegenhaltungen:
- WO-A-89/03322
- AT-B- 377 484
- DE-A- 3 204 540
- DE-A- 3 532 295
- DE-A- 3 817 086
- DE-U- 8 801 833
- GB-A- 2 136 086

## Beschreibung

Die Erfindung betrifft einen Antrieb zur Betätigung einer mehrfach verstellbaren Rückenlehne, der ein von einer Welle durchdrungenes, einzelne, separat wirkende, durch Verschieben der Welle wahlweise ansteuerbare Spannmechanismen aufweisendes, aus Schneckenwelle und Rad bestehendes Mehrfachspannschloß umfaßt, wobei alle Spannmechanismen auf einer Schaltwelle gekoppelt sind, das Spannschloß räumlich getrennt von der Verstelleinrichtung für die Rückenlehne angeordnet ist und die Spannmechanismen Bowdenzüge umfassen.

Mehrfach verstellbare Rückenlehnen, insbesondere von Sitzen im KFZ-Bereich, benötigen herkömmlicherweise für jede voneinander unabhängige Betätigung ihrer Verstelleinrichtung, beispielsweise Änderung der Wölbung, Höhenverstellung, Seitenhalt usw., einen eigenen Antrieb, wobei die Verstellung mechanisch oder elektrisch durchgeführt werden kann.

Die GB-A-2 136 086 offenbart (gemäß dem Oberbegriff des Anspruchs 1) einen Antrieb zur Betatigung einer mehrfach verstellbaren Rückenlehne, der ein Mehrfachspannschloß umfaßt, wobei das Spannschloß räumlich getrennt von der Verstelleinrichtung für die Rückenlehne angeordnet ist und wobei die Spannmechanismen Bowdenzüge umfassen.

Aus der AT-B-377 484 sowie aus der DE-A-3 204 540 und der DE-A-3 817 086 sind aber auch bereits Verstellvorrichtungen für Rückenlehnen bekannt, bei welchen die Verstell- bzw. Spannmechanismen einem gemeinsamen Antriebsglied oder einer gemeinsamen Antriebswelle zugeordnet sind. Das gemeinsame Antriebsglied bzw. die gemeinsame Antriebswelle sind aber bei diesen bekannten Verstellvorichtungen immer jeweils integrierte Bestandteile derselben bzw. mit den Vorrichtungsteilen zur Verstellung der Wölbung oder Einstellung der Höhenlage der Stützwirkung in direkter Weise fest verbunden und bilden miteinander eine integrierte Einheit. Der besondere Nachteil dieser bekannten Konstruktionen liegt darin, daß sie zum einen platzraubend sind, was sich schließlich auch auf die Einbaubarkeit in Rückenlehnen nachteilig auswirkt. Zum andern ist ihre Bedienbarkeit nicht sehr vorteilhaft, weil das starr angeordnete Antriebsglied bzw. die Antriebswelle nur jeweils an einer vorgegebenen Stelle der Rückenlehne zur Betätigung aus dieser herausführbar ist, dieser Bereich aber nicht immer der am leichtesten zugängliche für eine bequeme Bedienbarkeit ist.

Ein weiterer Nachteil dieser bekannten Konstruktionen liegt auch darin, daß die in unmittelbarer Nähe der eigentlichen für die Verstellung der Rückenlehne wirksamen Teile angeordneten Antriebe eine optimale Ausbildung der Verstellmechanismen bzw. Verstellvorrichtungen selbst in kostruktiver und funktioneller Hinsicht behindern und beispielsweise auch einen nachträglichen Einbau derselben in Rückenlehnen sehr erschweren.

Schließlich bewirkt insbesondere bei einer mechanischen Verstellung, bei der die Antriebswelle an einem bestimmten vorgegebenen Punkt aus dem Sitz geführt werden muß, beispielsweise bei einer Verstellung der Höhe, eine unangenehme Schrägstellung der Welle und des mit ihm verbundenen Handrades.

Aufgabe der Erfindung ist es, einen Antrieb zu schaffen, mit dessen Hilfe mehrere Verstellungen eines Sitzes bzw. einer Rückenlehne durchgeführt werden können und dessen Schaltwelle an einer beliebigen Stelle aus der Rückenlehne herausführbar ist, wobei bei Betätigung des Antriebes die Stirnfläche des beispielsweise verwendeten Handrades unverändert bleibt und damit eine leichte Handhabung gegeben ist.

Die Erfindung löst die Aufgabe dadurch, daß die Bowdenzüge über eine auf der Schaltwelle aufsitzende Seilrolle betätigbar sind und daß das Schneckenrad eine Seilscheibe mit aufgesetztem Zahnradsegment umfaßt, wobei ein Bowdenzug in die Seilscheibe geklemmt ist.

Weitere Merkmale und Vorteile der Erfindung sind in den Unteransprüchen offenbart bzw. ergeben sich aus diesen.

Die Erfindung wird im folgenden anhand eines Ausführungsbeispieles unter Zuhilfenahme der angeschlossenen Zeichnungen näher beschrieben.

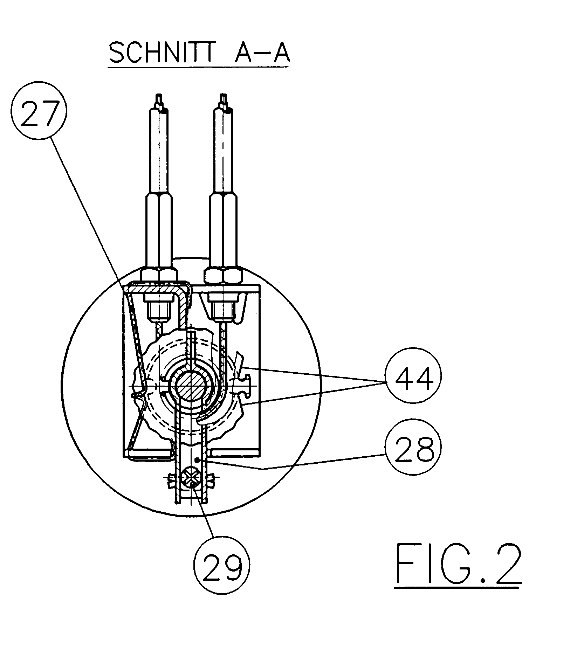

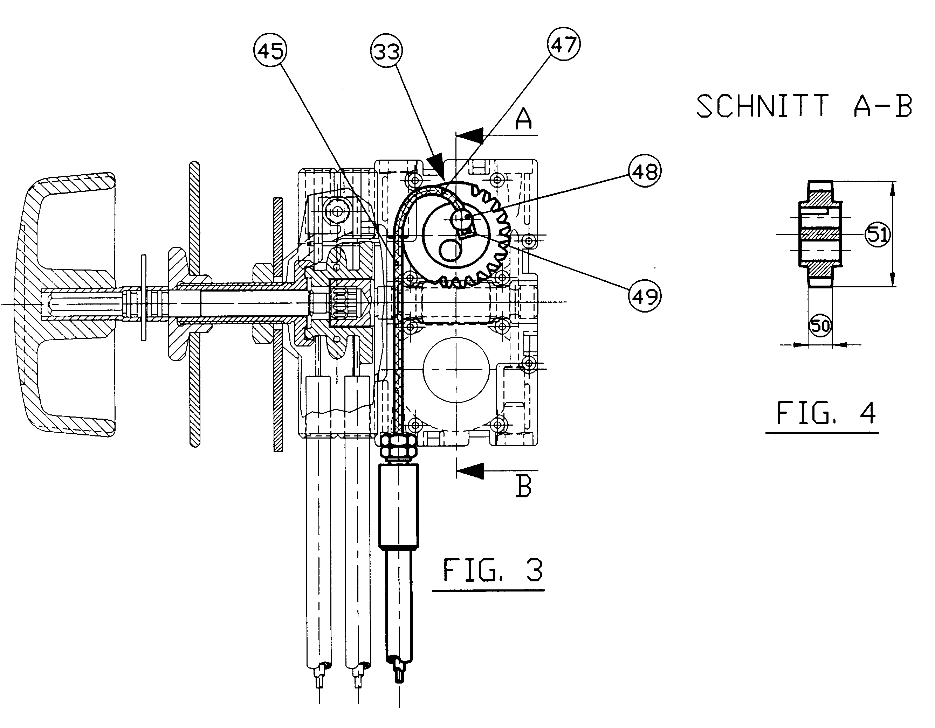

Es zeigen Fig. la einen erfindungsgemäßen Antrieb teilweise aufgebrochen im Längsschnitt, Fig. lb den erfindungsgemäßen Antrieb gemäß Fig. la mit abgenommenem Gehäuse, Fig. 2 einen Schnitt entlang der Linie A-A der Fig. la, Fig. 3 eine Ausführungsform eines Schrägzahnsegmentes angeordnet in dem Antrieb gemäß Fig. la und Fig. 4 einen Schnitt entlang der Linie A-B der Fig. 3.

In einer Schloßschale 32 eines Spannschlosses 10 ist eine Schneckenwelle 30 angeordnet, die mit einer Seilscheibe 34 über ein Schrägzahnradsegment 33 zusammenwirkt, wobei die Seilscheibe mit dem Schrägzahnrad mittels Nieten 35 verbunden ist. An die Seilscheibe 34 ist ein an der Verstelleinrichtung für die Rückenlehne angreifender Bowdenzug B3 angeklemmt. In Verlängerung der Achse der Schneckenwelle 30 verläuft die Schaltwelle 20 zum Handrad 43, über das der Spannmechanismus betätigt und der Bowdenzug B3 bewegt und damit eine Verstellung der Rückenlehne vorgenommen werden kann. Die Schaltwelle 20 ist von einem Rohr 19 umfaßt, zwischen dem eine Einrastfeder 21 angeordnet ist. Daran anschließend ist auf der Schaltwelle 20 eine als Abhalter des Polsterungsstoffes der Rückenlehne dienende Scheibe 23, die über eine Mutter 22 fixierbar ist, aufsetzbar. Aus der Mutter 22 kommend läuft eine Flanschhülse 42 über die Schaltwelle 20. Auf der Flanschhülse 42 ist im Bereich eines Gehäuses 46 eine Zentrierscheibe 24 angeordnet, die mittels einer Fächerscheibe oder eines Sprengringes 40 bzw. einer Sechskantmutter 41 aufgesetzt ist. Die Flanschhülse 42 verbreitert sich innerhalb des an dem Gehäuse 46 angeschlossenen Halteblechs 38 und wirkt mit diesem zusammen. Zwischen der verbreiterten Flanschhülse 42 und dem Gehäuse 46, das den Freiraum zwischen Halteblech 38 und Schloßschale 32 umschließt, der durch Zusammennieten oder -schrauben dieser Teile entsteht, ist eine Seilrolle 25 eingeklemmt, die von einem verbreiterten Abschnitt der Schaltwelle 20 durchsetzt ist, der als Schalteinheit dient. Die Seilrolle 25 ist einseitig von einer Anschlagfeder 27 umgeben und wirkt mit dieser zusammen. Die Anschlagfeder 27 ist an den Halteblechen 38 geklemmt und kann in Ausnehmungen 44 der Seilrolle 25 einrasten, wodurch ein anderer an der Verstelleinrichtung für die Rückenlehne angreifender Bowdenzug B1 oder B2 betätigt werden kann. Weiters ist eine Einrastfeder 39 vorgesehen, die in Längsrichtung sogleich als Anschlag wirkt. Sie muß weiters in beiden Richtungen wirksam, also Zug- und Druckfeder zugleich, sein.

An die Seilscheibe 25 greifen in ihrem Umfangsbereich die zwei weiteren Bowdenzüge B1 und B2 an.

Es kann nun, z.B. durch einfaches Verdrehen des Handrades 43, der Bowdenzug B3 und damit durch Verdrehen der Seilscheibe 34 beispielsweise die Wölbung der Rückenlehne verstellt werden. Durch einfaches Herausziehen des Handrades 43 und Verschieben der Schaltwelle 20, was ein Zusammenwirken mit der Seilrolle 25 hervorruft, kann der andere an der Verstelleinrichtung für die Rückenlehne angreifender Bowdenzug B1, B2 in Funktion gesetzt werden. Eine Gummischeibe 37 verhindert beim Hineindrücken der Schaltwelle 20 in die Schneckenwelle 30 störende Geräusche.

Die Schneckenwelle kann auch von der Schaltwelle durchdrungen sein (nicht dargestellt) und wahlweise in einem zweiten oder dritten Spannschloß einrasten und dieses damit betätigen. Hiermit ist ein Multifunktionsantrieb geschaffen, der auf einfache Weise mit Einhandbetrieb die Betätigung mehrerer Funktionen zuläßt.

An Stelle von Schnecke und Schneckenzahnrad kann auch eine Schlaufen-, Rollen-, Keil- oder Freilaufbremse direkt oder indirekt in den Spannmechanismus, auch über Bowdenzug extern, d.h. räumlich von der Rückenlehne getrennt wirkend eingeschaltet werden.
In einer weiteren (nicht dargestellten) Ausführungsform des Antriebes ist statt einer separaten, außen liegenden Seilscheibe 34 gemäß Fig. 3 das Seil 45 in den Innenraum der Schloßschale 32 hinein- und sofort mittels einer Spiralnut 47 um das Schrägzahnrad 33 herumgeführt, das über einen Teil gegebenenfalls als zahnloses Segment bzw. das Segment wie eine Seilscheibe ausgeführt sein kann. Das Schrägzahnrad 33 kann dabei an einem oder beiden Ende(n) des gegebenenfalls wie eine Seilscheibe ausgebildeten zahnlosen Segmentes in Richtung des Mittelpunktes des Lagerzapfens 51 hin durch die Spiralnut 47 verlängert sein, an deren Ende ein Querloch 48, eine Vertiefung oder ein Gewindeloch vorgesehen ist, sodaß das Seilende 49 innerhalb des Schrägzahn-/Seilscheibenrades außerdem noch, z.B. durch einen aufgequetschten Nippel, Kegel od. dgl., verankerbar ist. Dadurch wird eine Zentirzität der Kräfte erreicht.

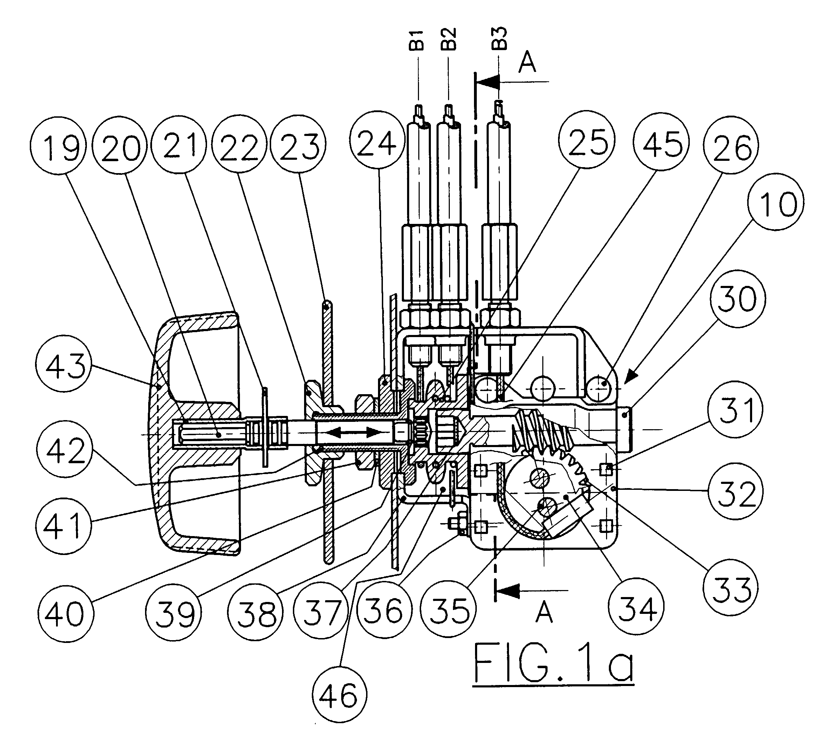

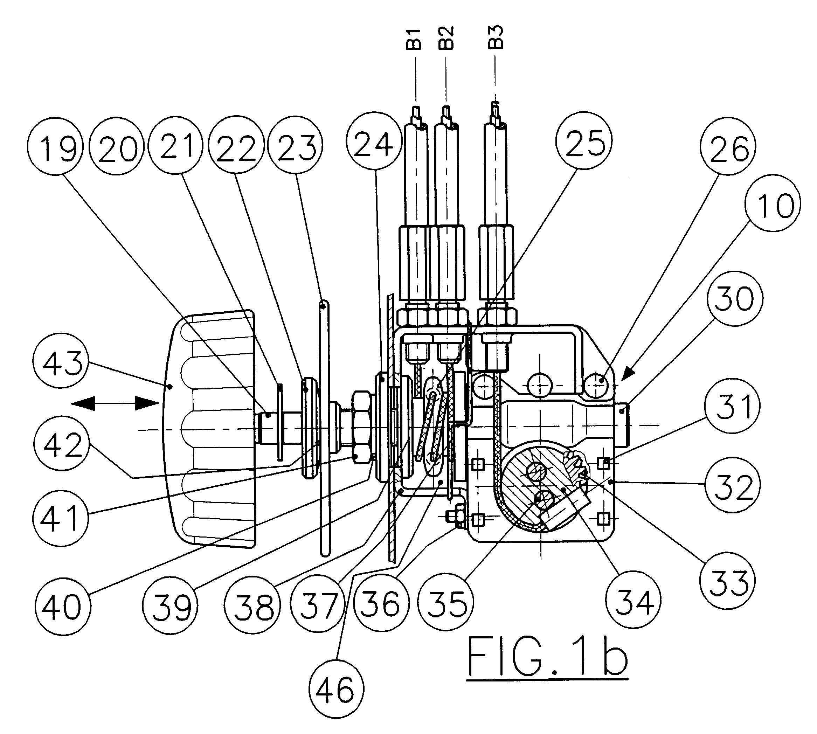

Das in Fig. 1 und 2 gezeigte Halteblech 38 wird z.B. durch Flachrundnieten 26 und einer Sechskantmutter 36 mit den beiden Schloßschalen 32, die mittels Distanzhalter 31 und Distanzhalter 28 mit eingepreßter Linsenschraube 29 gemäß Fig. 4 auf die Distanz 50 des Schrägzahnrades 33 gehalten werden, montiert.

## Patentansprüche

1. Antrieb zur Betätigung einer mehrfach verstellbaren Rückenlehne, der ein von einer Welle (20) durchdrungenes, einzelne, separat wirkende, durch Verschieben der Welle (20) wahlweise ansteuerbare Spannmechanismen aufweisendes, aus Schneckenwelle (30) und Rad bestehendes Mehrfachspannschloß (10) umfaßt, wobei alle Spannmechanismen auf einer Schaltwelle (20) gekoppelt sind, das Spannschloß (10) räumlich getrennt von der Verstelleinrichtung für die Rückenlehne angeordnet ist und die Spannmechanismen Bowdenzüge (B1, B2, B3) umfassen, dadurch gekennzeichnet, daß die Bowdenzüge (B1, B2) über eine auf der Schaltwelle (20) aufsitzende Seilrolle (25) betätigbar sind und daß das Schneckenrad eine Seilscheibe (34) mit aufgesetztem Zahnradsegment (33) umfaßt, wobei ein Bowdenzug (B3) in die Seilscheibe (34) geklemmt ist.

2. Antrieb nach Anspruch 1, dadurch gekennzeichnet, daß zwischen der Schaltwelle (20) und der Seilrolle (25) eine Rastfeder (39) angeordnet ist.

3. Antrieb nach Anspruche 2, dadurch gekennzeichnet, daß die Rastfeder (39) auf Zug und Druck sowie Querfederung belastbar ist und einen Anschlag für die Drehbewegung der Schaltwelle (20) in Federlängsrichtung bildet.

4. Antrieb nach Anspruch 1, dadurch gekennzeichnet, daß ein Bowdenzug direkt um das Schrägzahnrad (33) geführt ist, das über einen Teil gegebenfalls als zahnloses Segment oder Segment einer Seilscheibe (34) ausgebildet ist.

5. Antrieb nach Anspruch 4, dadurch gekennzeichnet, daß das Schrägzahnrad (33) an einem oder beiden Ende(n) des Segmentes der Seilscheibe (34)in Richtung des Mittelpunktes eines Lagerzapfens (51) hin durch eine Spiralnut (47) verlängert ist, an deren innerem Ende eine Befestigungsanordnung (48) für einen Bowdenzug (45,49) vorgesehen ist.

6. Antrieb nach Anspruch 2, dadurch gekennzeichnet, daß in die Seilrolle (25) eine als Anschlag wirkende Feder (27) eingreift.

7. Antrieb nach Anspruch 6, dadurch gekennzeichnet, daß die Seilrolle (25) mit Ausnehmungen (44) für die Feder (27) versehen ist.

8. Antrieb nach einem der Ansprüche 1 bis 7, dadurch gekennzeichnet, daß anstelle des Schneckentriebes oder gekoppelt mit diesem ein oder mehrere Einfach- oder Doppel -Freilaufbremsen auf der Schaltwelle (20) sitzen.

## Claims

1. Drive for actuation of a multiply adjustable seat back which comprises a multiple tensioner (10) consisting of a worm shaft (30) and gear, penetrated by a shaft (20), having individual separately acting tensioning mechanisms controllable according to choice by shifting of the shaft (20), wherein all tensioning mechanisms are coupled on to one selector shaft (20), the tensioner (10) is arranged spatially separate from the adjustment device for the seat back and the tensioning mechanisms comprise Bowden cables (B1, B2, B3), characterised in that the Bowden cables (B1, B2) are actuatable via a pulley (25) set on the selector shaft (20) and that the worm wheel comprises a pulley disc (34) with a toothed gear segment (33) set thereon, wherein one Bowden cable (B3) is clamped in the pulley disc (34).

2. Drive according to Claim 1, characterised in that a latch spring (39) is arranged between the selector shaft (20) and the pulley (25).

3. Drive according to Claim 2, characterised in that the latch spring (39) can be subjected to tension and pressure as well as transverse springing and constitutes a stop for the rotational movement of the selector shaft (20) in the longitudinal direction of the spring.

4. Drive according to Claim 1, characterised in that a Bowden cable is guided directly about the helically toothed gear (33), which is constructed over one part as appropriate as a toothless segment or segment of a pulley disc (34).

5. Drive according to Claim 4, characterised in that the helically toothed gear (33) is prolonged on one or both ends of the segments of the pulley disc (34) in the direction of the centre point of a bearing trunnion (51) via a spiral groove (47) on the inner end of which is provided a fixing arrangement (48) for a Bowden cable (45, 49).

6. Drive according to Claim 2, characterised in that a spring (27) acting as a stop engages in the pulley roll (25).

7. Drive according to Claim 6, characterised in that the pulley (25) is provided with recesses (44) for the spring (27).

8. Drive according to one of Claims 1 to 7, characterised in that in place of the worm drive or coupled with this, there are set on the selector shaft (20) one or several single or double freewheel brakes.

## Revendications

1. Entraînement pour actionner un dossier de siège à déplacements multiples, comprenant un tendeur multiple (10) qui est traversé par un arbre (20), qui présente des mécanismes tendeurs individuels, ceux-ci agissant séparément et pouvant être actionnés au choix par déplacement de l'arbre (20), et qui est constitué par un arbre à vis sans fin (30) et par une roue tangente, cependant que tous les mécanismes tendeurs sont accouplés sur un arbre de commutation (20), que le tendeur (10) est séparé dans l'espace du dispositif de déplacement qui est destiné au dossier de siège et que les mécanismes tendeurs comprennent des câbles sous gaine (B1, B2, B3), caractérisé par le fait que les câbles sous gaine (B1, B2). peuvent être actionnés par l'intermédiaire d'une poulie (25) qui est montée sur l'arbre de commutation (20), et par le fait que la roue tangente comprend une poulie de renvoi (34) sur laquelle est placé un segment de roue dentée (33), un câble sous gaine (B3) étant serré dans la poulie de renvoi (34).

2. Entraînement selon la revendication 1, caractérisé par le fait qu'un ressort d'encliquetage (39) est disposé entre l'arbre de commutation (20) et la poulie (25).

3. Entraînement selon la revendication 2, caractérisé par le fait que le ressort d'encliquetage (39) peut être sollicité à la traction et à la compression, ainsi qu'en rappel élastique transversal, et qu'il constitue une butée pour le déplacement en rotation de l'arbre de commutation (20) dans la direction longitudinale du ressort.

4. Entraînement selon la revendication 1, caractérisé par le fait qu'un câble sous gaine passe directement autour de la roue hélicoïdale (33) qui est réalisée le cas échéant, sur l'une de ses parties, sous la forme d'un segment sans dents ou d'un segment d'une poulie de renvoi (34).

5. Entraînement selon la revendication 4, caractérisé par le fait que la roue hélicoïdale (33) est prolongée à l'une des extrémités du segment de la poulie de renvoi (34), ou des deux, dans la direction du centre d'un goujon formant palier (51), par une rainure en spirale (47) sur l'extrémité intérieure de laquelle est prévu un système de fixation (48) qui est destiné à un câble sous gaine (45, 49).

6. Entraînenent selon la revendication 2, caractérisé par le fait qu'un ressort (27) agissant comme une butée pénètre dans la poulie (25).

7. Entraînement selon la revendication 6, caractérisé par le fait que la poulie (25) est pourvue d'évidements (44) qui sont destinés au ressort (27).

8. Entraînement selon l'une des revendications 1 à 7, caractérisé par le fait qu'un ou plusieurs freins à roue libre simples ou doubles sont montés sur l'arbre de commutation (20) à la place du mécanisme à vis sans fin ou en étant accouplés à celui-ci.
